# EUROPÄISCHE PATENTSCHRIFT

(11) **EP 1 262 007 B1**
(45) Veröffentlichungstag und Bekanntmachung des Hinweises auf die Patenterteilung: **26.05.2004**
(21) Anmeldenummer: 01917015.8
(22) Anmeldetag: 21.02.2001
(51) Int. Cl.: H02H 3/02

(54) **DAUERMAGNETISCH ERREGTE ELEKTRISCHE MASCHINE UND VERFAHREN ZUM BETREIBEN EINER SOLCHEN MASCHINE**
PERMANENT MAGNET INDUCED ELECTRIC MACHINE AND METHOD FOR OPERATING SUCH A MACHINE
MACHINE ELECTRIQUE EXCITEE PAR AIMANTS PERMANENTS, ET PROCEDE POUR FAIRE FONCTIONNER UNE TELLE MACHINE

(30) Priorität: 21.02.2000 DE 10007777
(43) Veröffentlichungstag der Anmeldung: 04.12.2002
(73) Patentinhaber: Magnet-Motor Gesellschaft für magnetmotorische Technik mbH, D-82319 Starnberg (DE)
(72) Erfinder: EHRHART, Peter, 81375 München (DE); HAGENLOCHER, Roland, 82152 Planegg (DE)
(74) Vertreter: Klunker . Schmitt-Nilson . Hirsch
(86) Internationale Anmeldenummer: PCT/EP2001/001986
(87) Internationale Veröffentlichungsnummer: WO 2001/063720

(56) Entgegenhaltungen:
- WO-A-96/27942
- DE-A- 3 432 845
- DE-A- 19 835 576
- US-A- 3 040 224
- US-A- 5 436 819
- US-A- 5 469 351
- US-A- 5 757 596

## Beschreibung

Die Erfindung betrifft eine dauermagnetisch erregte elektrische Maschine, umfassend die Merkmale des Oberbegriffs des Anspruchs 1.

Derartige Maschinen sind allgemein bekannt. Üblicherweise ist der Rotor der Dauermagnete tragende Erregerteil, der in einer vorbestimmten Lage gegenüber dem Stator drehbar angeordnet ist. Mit Hilfe der elektronischen Schalteinrichtung wird in die Spulen beispielsweise aus einem Gleichspannungszwischenkreis Energie eingekoppelt, um die Maschine als Motor zu betreiben. Im Betrieb als Generator wird die in den einzelnen Spulenwicklungen durch die Drehung des Rotors erzeugte elektrische Energie über die elektrische Schalteinrichtung ausgekoppelt.

Nach dem Faraday'schen Induktionsgesetz wird in den einzelnen Spulenwindungen eine Spannung induziert, an den Anschlüssen der Spulenwicklungen steht die Summe der einzelnen Windungsspannungen an.

Wenn bei laufender Maschine ein Kurzschluß in einer Windung oder in mehreren bzw. über mehrere Windungen einer Statorwicklung auftritt, kommt es durch den die Spulenwicklungen durchsetzenden magnetischen Wechselfluß zu einem Kurzschlußstrom in der kurzgeschlossenen Windung bzw. in den kurzgeschlossenen Windungen.

Gemäß der Lenz'schen Regel weist der Kurzschlußstrom eine Stärke auf, gemäß der der dauermagnetische Wechselfluß aufgehoben wird. Der durch den Kurzschlußstrom elektrisch induzierte magnetische Wechselfluß hat also den gleichen Betrag wie der durch die Dauermagnete hervorgerufene Wechselfluß und ist letzterem in der Phase entgegengesetzt.

Die in einer oder mehreren oder über mehrere kurzgeschlossene Windungen fließenden Kurzschlußströme übersteigen die Nenn-Spulenströme um ein Mehrfaches, und dementsprechend kommt es zu beträchtlichen Wärmeverlusten. In der Regel können die Statorwicklungen dann nicht ausreichend gekühlt werden, so daß es zum Abbrand der betroffenen Windung oder des Windungsteils in der Statorwicklung kommt.

Der Erfindung liegt die Aufgabe zugrunde, eine dauermagnetisch erregte elektrische Maschine der genannten Art derart weiterzubilden, daß im Fall eines Windungskurzschlusses eine Zerstörung der vom Kurzschluß betroffenen Windung bzw. des betroffenen Windungsabschnitts verhindert werden kann.

Außerdem soll ein Verfahren zum Betreiben einer dauermagnetisch erregten elektrischen Maschine angegeben werden, mit dessen Hilfe im Fall eines Windungskurzschlusses eine Zerstörung der kurzgeschlossenen Windung vermieden wird.

Zur Lösung der obigen Aufgabe ist die elektrische Maschine erfindungsgemäß ausgerüstet mit den Merkmalen des kennzeichnenden Teils des Anspruchs 1.

Bei einem Verfahren zum Betreiben einer dauermagnetisch erregten elektrischen Maschine mit den eingangs genannten Merkmalen sieht die Erfindung die Schritte des Anspruchs 12 vor.

Die Erfindung beruht auf der Erkenntnis, daß man bei einem Windungs-Kurzschluß zwar nicht die Entstehung eines Kurzschlußstroms vermeiden kann, der zu einem betragsmäßig dem dauermagnetischen Wechselfluß entsprechenden elektrisch induzierten magnetischen Wechselfluß führt, daß man diesen Kurzschlußstrom aber auch auf solche Windungen verteilen kann, die nicht von dem Kurzschluß betroffen sind, jedoch mit der vom Kurzschluß betroffenen Windung magnetisch gekoppelt sind.

In einer Ausführungsform der Erfindung wird bei Erkennung eines Kurzschlusses in einer Windung oder in einem Windungsabschnitt einer Spulenwicklung die betreffende Spule an ihren Anschlüssen kurzgeschlossen, so daß sich ein Kurzschlußstrom in der gesamten Spule einstellt, der zu einem elektrisch induzierten magnetischen Wechselfluß führt, der betragsmäßig dem dauermagnetischen Wechselfluß entspricht und diesem in der Phase entgegengesetzt ist. Durch diesen Vorgang wird die von dem Kurzschluß betroffene Windung entlastet. Der Kurzschlußstrom der betroffenen Windung verringert sich erheblich, so daß die durch den "verteilten" Kurzschlußstrom verursachten Verluste durch die vorhandenen Kühlmittel ausgeglichen werden können, also ein Abbrand der betroffenen Windung verhindert werden kann.

Speziell bei elektrischen Maschinen mit Stator aus Einzelspulen, die nur schwach magnetisch miteinander verkettet sind, entspricht der durch die gesamte Spule fließende Kurzschlußstrom in etwa dem maximalen Betriebsstrom, der beim Normalbetrieb durch die Spulenwicklung fließt. Die für den normalen Betriebsstrom ausgelegte Kühlung reicht also im Fall eines Windungs-Kurzschlusses aus, die thermischen Verluste durch den in der betroffenen Windung fließenden Kurzschlußstrom und den im Rest der Spulenwicklung fließenden Kurzschlußstrom zu kompensieren.

Im Fall eines Kurzschlusses kann die Maschine - je nach Anwendungsfall - rasch und ungeregelt oder langsam und geregelt zum Stillstand gebracht werden. Im Fall einer elektrischen Maschine mit Einzelspulen kann im Fall eines Windungs-Kurzschlusses die betroffene Spule kurzgeschlossen werden, die übrigen Spulen hingegen können wie im Normalbetrieb angesteuert werden, d. h., es läßt sich ein geregeltes Abbremsen des Motors erreichen. Möglich ist aber auch das Kurzschließen einer oder mehrerer weiterer Spulen, bis hin zu dem Extremfall, daß sämtliche Spulen kurzgeschlossen werden. In diesem Fall erfolgt ein extrem rasches Anhalten der Maschine, was allerdings in einigen Fällen durchaus in Kauf genommen werden kann.

Die schaltungstechnische Realisierung der Veranlassung eines Kompensations-Stromflusses, d. h. eines Kurzschlußstroms in dem von dem Windungs-Kurzschluß nicht betroffenen Teil einer oder mehrerer Spulen, läßt sich bevorzugt durch eine Schalteinrichtung zwischen den Anschlüssen der Spulenwicklung vornehmen. Mit Hilfe eines Relais oder eines Schützes erfolgt dann der Kurzschluß der Statorwicklung, in der sich der vom Kurzschluß betroffene Windungsteil befindet. Vorteilhaft ist hierbei insbesondere,. daß der dann fließende Kurzschlußstrom automatisch phasenrichtig bezüglich des Kurzschlußstroms in der betroffenen Windung ist.

Als Alternative zu der Schalteinrichtung zwischen den Anschlüssen der Spulenwicklung, oder aber auch als Ergänzung zu einer solchen Schalteinrichtung kann die Kompensationseinrichtung durch die ohnehin vorhandene elektronische Schalteinrichtung gebildet werden, die das Einkoppeln bzw. Auskoppeln der Ströme in die Spulenwicklung bzw. aus der Spulenwicklung steuert. Die elektrische Maschine besitzt - sowohl als Motor als auch als Generator - üblicherweise eine elektronische Stelleinrichtung, die die Spulenwicklung aus einem Gleichspannungszwischenkreis speist bzw. aus der Spulenwicklung zeitrichtig Energie in einen Gleichspannungszwischenkreis einkoppelt. Im Fall eines Kurzschlusses wird diese elektronische Schalt- oder Stelleinrichtung dann insbesondere auf Stromdauerdurchgang eingestellt. Der Stromfluß in der elektronischen Stelleinrichtung entspricht dann etwa dem maximalen Nenn-Betriebsstrom im Normalbetrieb der Maschine. Falls eine separate Schalteinrichtung, z. B. ein Relais oder Schütz, zum Kurzschließen des Stators vorhanden ist, wird nach dem Schließen dieses Schalters zum Kurzschließen der Statorwicklung die Stelleinrichtung geöffnet.

Im Fall des Veranlassens des Kompensations-Stromflusses mit Hilfe der elektronischen Stelleinrichtung kann letztere aktiv gesteuerten Strom in die Kurzschluß behaftete Spule einspeisen, wobei die Stromrichtung dann so gestellt wird, daß der Strom phasenrichtig bezüglich des Kurzschlußstroms in der betroffenen Windung fließt. In den zu nicht-kurzgeschlossenen Spulen gehörigen elektronischen Schalt- oder Stelleinrichtungen oder auch in einem Teil von ihnen wird dann so gearbeitet, als liefe die Maschine im Normalbetrieb.

Wie oben bereits angesprochen, können speziell bei einer elektrischen Maschine mit Einzelspulen ein, mehrere oder sämtliche Einzelspulen im Fall einer von einem Windungs-Kurzschluß betroffenen Spule kurzgeschlossen bzw. mit einem Kompensationsstrom beaufschlagt werden. Das Beaufschlagen sämtlicher Spulen führt zu einem Abbremsen der Maschine mit höchstmöglichem Bremsmoment. Dies ist möglicherweise in einigen Fällen hinzunehmen oder sogar erwünscht, kann in anderen Fällen jedoch zu gefährlichen Situationen führen, beispielsweise dann, wenn die elektrische Maschine als Antrieb für ein Fahrzeug verwendet wird. In diesem Fall ist es zu bevorzugen, nur die von dem Windungs-Kurzschluß betroffene Spule - und ggf. eine oder einige zusätzliche Spulen - zu beaufschlagen, während die verbleibenden Spulen der Maschine derart angesteuert werden, daß ein geregeltes Abbremsen der Maschine erreicht wird.

Während sich die obigen Ausführungen mit der Erfindung und speziellen und bevorzugten Ausführungsformen der Erfindung mit dem Erzeugen von Kompensations-Stromflüssen im Fall eines Windungs-Kurzschlusses befassen, soll im folgenden auf das Erkennen oder Detektieren eines Windungs-Kurzschlusses näher eingegangen werden. Als Kurzschlußdetektoreinrichtung kann man z. B. einen Temperatursensor für jede Spulenwicklung vorsehen. Da ein Windungs-Kurzschluß zu einem Kurzschlußstrom mit entsprechend rascher Entstehung von Verlustwärme führt, läßt sich diese Verlustwärme als Indiz für einen Windungs-Kurzschluß heranziehen. Diese Maßnahme hat insbesondere den Vorteil, daß Temperatursensoren möglicherweise ohnehin für den Ablauf des Normalbetriebs der Maschine vorhanden sind, also bereits vorhandene Temperatursensoren zum Erkennen von Windungs-Kurzschlüssen eingesetzt werden können. Die Ausgangssignale der Temperatursensoren werden von einer Kurzschlußdetektor/Kompensationssteuerung erfaßt und umgesetzt in Steuersignale zum Veranlassen von Kurzschlußströmen, beispielsweise durch Schließen der oben angesprochenen Schalter zwischen den Anschlüssen der Spulenwicklungen oder durch Durchgangssteuern der zu der betroffenen Spulenwicklung gehörigen elektronischen Schaltventile.

In einer abgewandelten Ausführungsform weist die Kurzschlußdetektoreinrichtung eine Induktivitätsmeßeinrichtung auf, mit deren Hilfe die jeweilige Spuleninduktivität erfaßt wird. Bei einem Windungs-Kurzschluß verändert sich der Stromverlauf in den an die Spulenwicklung angeschlossenen Verbindungsleitungen. Mit Hilfe von an diese Leitungen angekoppelten Stromfühlern läßt sich der Strom in den Leitungen erfassen. Durch Differenzieren des Stromverlaufs und Vergleichen des so erhaltenen Ableitungswerts für den Strom mit einem Schwellenwert lassen sich steiler gewordene Stromverlauf-Flanken ermitteln. Extrem steile Flanken im Stromverlauf weisen auf eine - durch Windungs-Kurzschluß bedingte - Verringerung der Spuleninduktivität hin. Das Auswerten der Spulenströme zum Erkennen von Induktivitätsverlusten in den einzelnen Spulen kann in einer zentralen Kurzschlußdetektor/Kompensationssteuerung stattfinden, bevorzugt erfolgt jedoch eine Auswertung und Kurzschlußbildung direkt in der elektronischen Stelleinrichtung der betroffenen Spule.

Wie oben bereits angesprochen, läßt sich eine besonders einfache und übersichtliche Kompensation bei Windungs-Kurzschlüssen dann erzielen, wenn der Stator aus Einzelspulen aufgebaut ist. Die Ausgänge der Spulen können elektrisch miteinander verkettet sein und entsprechend von der elektronischen Schalteinrichtung betrieben werden. Besonders bevorzugt wird die Erfindung aber eingesetzt bei solchen Maschinen, bei denen der Stator aus voneinander unabhängigen Einzelspulen gebildet ist. Dabei besitzt jede Spule einen ihr separat zugeordneten Einphasen-Wechselrichter. Das Erkennen von Kurzschlüssen und Veranlassen von Kompensationsströmen erfolgen separat in dem Zweig der betroffenen Spule. Dies kann entweder völlig unabhängig von den übrigen Teilen des Stators geschehen, oder man kann mit Hilfe einer zentralen Einrichtung koordinierte Maßnahmen vorsehen.

Im folgenden werden Ausführungsbeispiele der Erfindung anhand der Zeichnung näher erläutert. Es zeigen:
- Fig. 1: ein Blockschaltbild des elektrischen Schaltkreises einer dauermagnetisch elektrischen Maschine gemäß der Erfindung;
- Fig. 2a: ein schematisches Ablaufdiagramm für die Überwachung und das Erkennen eines Windungs-Kurzschlusses in einer erfindungsgemäßen dauermagnetisch erregten elektrischen Maschine mit N Einzelspulen;
- Fig. 2b: ein Teil-Flußdiagramm einer alternativen Ausgestaltung des in Fig. 2a dargestellten Verfahrens; und
- Fig. 3: eine stark schematisierte Darstellung einer dauermagnetisch erregten elektrischen Maschine.

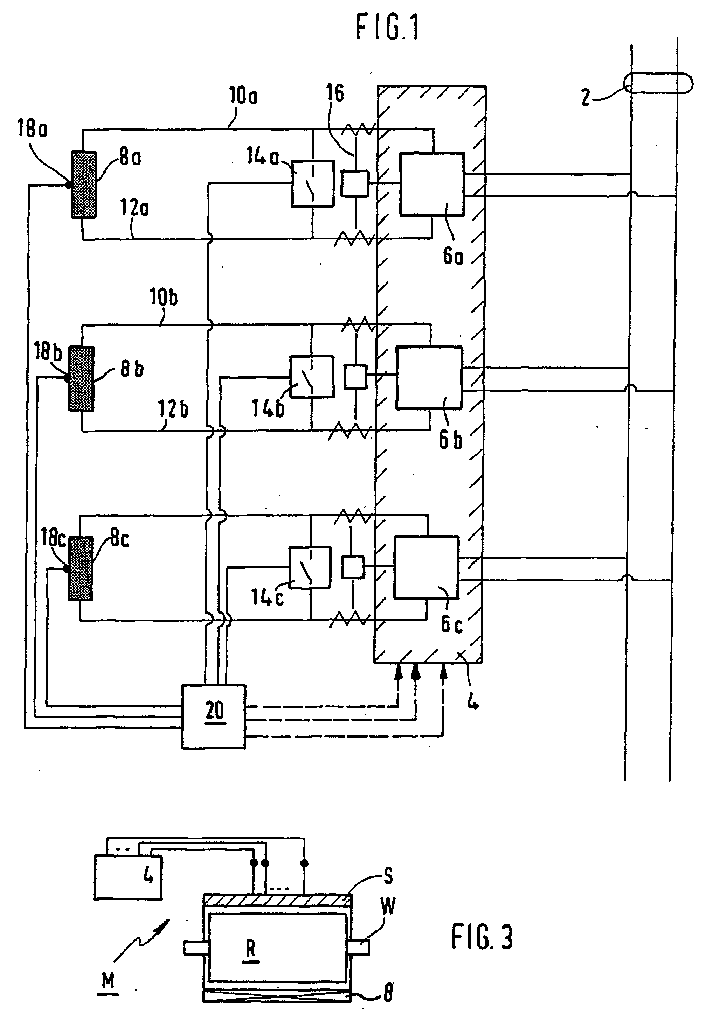

Bevor auf das in Fig. 1 dargestellte Blockdiagramm der elektrischen Schaltung einer dauermagnetisch erregten elektrischen Maschine gemäß der Erfindung eingegangen wird, sollen zunächst die Hauptbestandteile einer solchen Maschine anhand der Fig. 3 erläutert werden.

Wie in Fig. 3 zu sehen ist, besteht eine insgesamt mit M bezeichnete, dauermagnetisch erregte elektrische Maschine aus einem Stator S mit einem feststehenden, zylindrischen Stator S, der mehrere Spulen 8 enthält, und einem in dem Stator S auf einer Welle W drehbar angeordneten Rotor R. An die Spulen 8 ist über schematisch angedeutete Leitungen eine Stell- und Schalteinrichtung 4 angeschlossen.

Der Rotor R besteht in an sich bekannter Weise aus einer Mehrzahl von über den Umfang verteilt angeordneten Dauermagneten.

Die Betriebsweise derartiger dauermagnetisch erregter elektrischer Maschinen ist an sich bekannt. Die Maschinen können wahlweise als Motor und als Generator arbeiten, wozu eine in der Betriebssteuerschaltung C vorhandene elektronische Schalteinrichtung in die Spulenwicklungen Strom einspeist, bzw. Strom aus den Spulenwicklungen auskoppelt.

In Fig. 3 ist als Beispiel eine Maschine mit Innenläufer gezeigt. Ein weiteres Beispiel wäre eine Maschine mit Außenläufer, deren Aufbau im Prinzip ebenfalls bekannt ist.

Fig. 1 zeigt in Form eines Blockschaltbilds die wesentlichen Komponenten des elektrischen Teils der erfindungsgemäßen dauermagnetisch erregten elektrischen Maschine.

Aus einem Gleichspannungszwischenkreis 2 werden drei als Einzelspulen ausgebildete Spulen 8a, 8b und 8c über eine elektronische Stell- oder Schalteinrichtung 4 betrieben.

Beim vorliegenden Ausführungsbeispiel sind die einzelnen Spulen 8a bis 8c unabhängig betreibbare Elemente der elektrischen Maschine, wobei der Fachmann aber erkennt, daß der Stator eine praktisch beliebige Anzahl von Spulen aufweisen kann, die als unabhängige Einzelspulen oder als verkettete Spulenanordnung ausgebildet sein können.

Im Fall des Betriebs als Elektromotor speisen innerhalb der elektronischen Schalteinrichtung 4 einzelne Steller 6a, 6b und 6c, die Einphasen-Wechselrichter darstellen, über Verbindungsleitungspaare 10a, 12a; 10b, 12b... Energie in die betreffenden Spulen 8a bis 8c ein.

In der Spulenwicklung jeder Spule 8a, 8b und 8c befindet sich ein Temperatursensor 18a, 18b bzw. 18c. Die von den Temperatursensoren erzeugten Temperatursignale werden auf eine Kurzschlußdetektor/Kompensationssteuerung 20 gegeben. Im Fall eines Kurzschlusses in einer Windung oder in einem Windungsteil einer der Spulen liefert der dazugehörige Temperatursensor ein Signal, welches eine signifikant erhöhte Temperatur in der betroffenen Spulenwicklung signalisiert, was auf einen Windungs-Kurzschluß hinweist.

Im folgenden sei angenommen, in der Spulenwicklung der Spule 8a gäbe es einen Windungs-Kurzschluß. Als Folge des Windungs-Kurzschlusses liefert der zu der Spule 8a gehörige Temperatursensor 18a an die Kurzschlußdetektor/Kompensationssteuerung 20 ein Signal, welches den Kurzschluß signalisiert. Die Schaltung 20 erzeugt daraufhin ein Schließsignal für ein Relais 14a, welches die Anschlüsse der Spule 8a, also die beiden Verbindungsleitungen 10a und 12a, kurzschließt. Daraufhin fließt in der Spule 8a ein Kurzschlußstrom, dessen Betrag einen elektrisch induzierten magnetischen Wechselfluß veranlaßt, der dem dauermagnetischen Wechselfluß, der die Spule mit dem Windungsschluß durchsetzt, entspricht.Der durch die gesamte Spule 8a fließende Kurzschlußstrom entspricht in etwa dem normalen maximalen Betriebsstrom durch die Spule 8a. Die für solche Betriebsströme ausgelegte Kühlung im Bereich der Spule 8a kann also die durch den Kurzschlußstrom veranlaßte Verlustwärme in ausreichender Weise abführen. Ohne den Kurzschluß der gesamten Spule 8a wäre ausschließlich in der von dem Kurzschluß betroffenen Windung oder dem betroffenen Windungsabschnitt ein Kurzschlußstrom geschlossen, von dem ein elektrisch induzierter magnetischer Wechselfluß entstanden wäre, der dem dauermagnetischen Wechselfluß im Betrag bei entgegengesetzter Phase entsprochen hätte. Durch das "Verteilen" des Kurzschlußstroms auf die gesamte Spule 8a wird also der betroffene Windungsabschnitt vor einem Abbrennen bewahrt. Nach dem Erkennen eines Kurzschlusses durch die Kurzschlußdetektor/Kompensationsschaltung und dem Veranlassen des Kompensationsstroms in der Spule 8a kann ein Fehlermeldesignal veranlaßt werden, welches den Kurzschluß in der elektrischen Maschine signalisiert.

Alternativ - und auch zusätzlich - zu dem Veranlassen des Kompensationsstroms in der oben beschriebenen Weise, d. h. durch Detektieren eines Kurzschlusses durch Temperatursensor kann ein Kurzschluß in einem Windungsabschnitt der Spule 8a auch durch Veränderung des Stromverlaufs in den Verbindungsleitungen 10a, 12a erkannt werden.

In dem Blockschaltbild in Fig. 1 sind in jedem Zweig der Spulen 8a, 8b und 8c Stromfühler 16 vorgesehen. Bei einem Kurzschluß in beispielsweise der Spule 8a verringert sich die Spuleninduktivität der Spule 8a. Bedingt durch die verringerte Spuleninduktivität werden die Flanken der Stromverläufe beträchtlich steiler. Bildet man die zeitliche Ableitung des von dem Stromfühler 16 erfaßten Stromverlaufs, und vergleicht man das so gewonnene Signal mit einem Schwellenwert, so läßt sich ein Windungs-Kurzschluß in der betreffenden Spule 8a erkennen. Zur Veranlassung eines Kompensationsstroms kann ein in dem Steller 6a enthaltener Schaltkreis eine Differenzierung des Stromverlaufs vornehmen, um ggf. die elektronischen Schaltelemente innerhalb des Stellers 6a auf Stromdauerfluß zu schalten und dadurch den Kurzschluß der Spule 8a zu bewerkstelligen.

Wenn - wie im obigen Beispiel angenommen - in der Spule 8a ein Windungs-Kurzschluß erkannt wird, so wird gemäß obigen Ausführungsbeispiel lediglich die Spule 8a kurzgeschlossen, sei es durch Schließen eines Relais 14a oder durch Einstellen des Stellers 6a auf Stromdauerdurchfluß, wobei das Relais 14a von der zentralen Kurzschlußdetektor/Kompensationssteuerung 20 angesteuert wird und der Kurzschlußstrom durch den Steller 6a intern anhand eines von dem Stromfühler 16 gelieferten Signals verursacht wird.

In einer weiteren bevorzugten Ausführungsform der Erfindung kann aber anstelle eines Kurzschließens ausschließlich der betroffenen Spüle 8a auch noch eine weitere Spule oder können mehrere Spulen mit einem Kompensationsstrom betrieben werden. Im Extremfall können in der drei Einzelspulen aufweisenden Anordnung nach Fig. 1 sämtliche Spulen 8a bis 8c kurzgeschlossen werden, was zu einem äußerst raschen Anhalten des Rotors führt. Wird beispielsweise bei einem Kurzschluß in einer Windung der Spule 8a zusätzlich die Spule 8b kurzgeschlossen, die Spule 8c hingegen wie im Normalbetrieb weiter betrieben, so läßt sich ein verlangsamtes Abbremsen des Rotors erreichen. Ein solcher koordinierter Betrieb im Fall eines Kurzschlusses in einer der Spulen 8a bis 8c ist durch gestrichelte Steuerleitungen rechts unten in Fig. 1 angedeutet, wobei die Steuerleitungen von der zentralen Kurzschlußdetektor/Kompensationssteuerung 20 zu der elektronischen Schalteinrichtung 4 führen, die die einzelnen Steller 6a bis 6c beinhaltet.

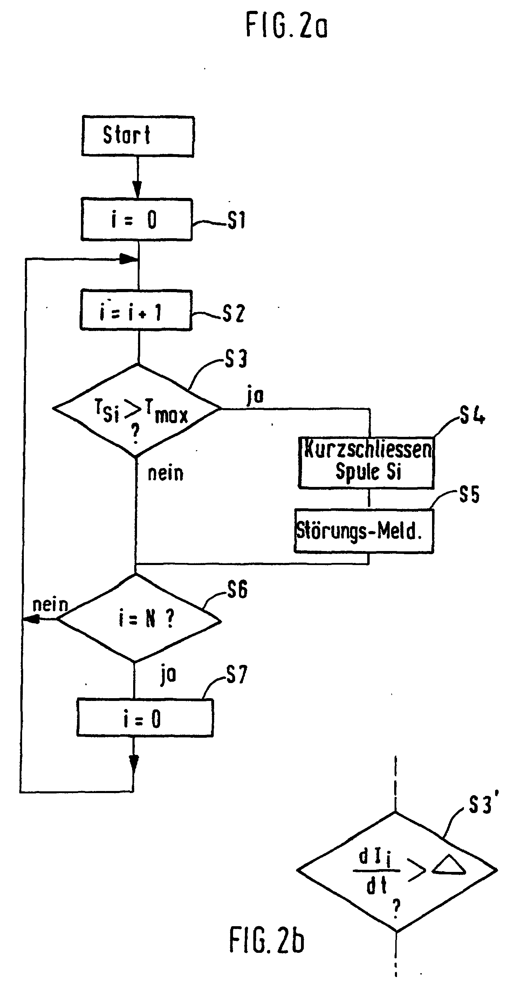

In Fig. 2a ist anhand eines schematischen Flußdiagramms der Ablauf der Überwachung zum Detektieren eines Kurzschlusses dargestellt.

Im Schritt S1 nach Fig. 2a wird ein Zähler i auf Null gestellt und im anschließenden Schritt S2 um 1 inkrementiert. i steht für eine von mehreren Einzelspulen 1, ... N einer elektrischen Maschine.

Im Schritt S3 wird die Temperatur Tₛᵢ der Spule i abgefragt. Übersteigt die Temperatur einen Schwellenwert Tmax, so wird im Schritt S4 die betroffene Spule Si kurzgeschlossen, und anschließend erfolgt im Schritt S5 eine Störungsmeldung.

Der Abfrage-Schritt S6 garantiert, daß jede der Spulen nacheinander bezüglich Kurzschluß geprüft wird. Nach Prüfung sämtlicher Spulen beginnt der Ablauf von vorne, indem im Schritt S7 der Index i wieder auf Null gesetzt wird.

Wie oben bereits erwähnt, kann das Erkennen eines Kurzschlusses auch durch Differenzieren des Stromverlaufs in den Zuleitungen der betroffenen Spule erfolgen. Wie in Fig. 2b durch den Schritt S3' angedeutet ist, wird zu diesem Zweck der Differenzialquotient dIi/dt gebildet und mit einem Schwellenwert Δ verglichen. Bei sehr steilen Stromflanken wird der Schwellenwert Δ überschritten. Die steilen Stromflanken sind Indiz für eine verringerte Spuleninduktivität, letztere wiederum bedingt durch einen Windungs-Kurzschluß.

## Patentansprüche

1. Dauermagnetisch erregte elektrische Maschine, umfassend
- einen Rotor (R) mit einem oder mehreren Dauermagneten;
- einen Stator (S) mit einer oder mehreren Spulen (8a-8c) mit Spulenwicklungen;
- eine elektronische Schalteinrichtung (4) zum Einkoppeln von Strom in die Spulen (8a-8c) und/oder zum Auskoppeln von Strom aus den Spulen,
- eine Kurzschfußdetektoreinrichtung (20; 16) zum Erfassen eines Kurzschlusses in einer oder in mehreren Windungen einer Spule (8a-8c), und
- eine Kompensationseinrichtung zum Veranlassen eines Kompensations-Stromflusses in zumindest derjenigen Spule, die die kurzgeschlossene Windung enthält, um den Kurzschlußstrom in der kurzgeschlossenen Windung zu reduzieren,
**dadurch gekennzeichnet,**
**daß** die elektronische Schalteinrichtung (4) aktiv gesteuerten Strom in die Kurzschluß behaftete Spule bzw. Spulen einspeist, der so gerichtet ist, daß er phasenrichtig zu dem Kurzschlußstrom innerhalb der von dem Kurzschluß behafteten Windung bzw. des Windungsabschnitts fließt.

2. Maschine nach Anspruch 1, **dadurch gekennzeichnet, daß** die Kompensationseinrichtung eine Schalteinrichtung (14a-14c) zwischen den Anschlüssen (10a, 12a; 10b, 12b ...) der Spulen (8a, 8b, ...) aufweist, um diese kurzzuschließen.

3. Maschine nach Anspruch 1 oder 2, **dadurch gekennzeichnet, daß** die Kompensationseinrichtung Bestandteil der elektronischen Schalteinrichtung (4) ist.

4. Maschine nach Anspruch 3, **dadurch gekennzeichnet, daß** die elektronische Schalteinrichtung auf Stromdauerdurchgang einstellbar ist, so daß sich in den Spulen ein Kurzschluß ergibt.

5. Maschine nach einem der Ansprüche 1 bis 4, **dadurch gekennzeichnet, daß** die Kompensationseinrichtung einen Kompensations-Stromfluß entweder
(a) nur in der Spule bzw. in den Spulen veranlaßt, in der sich der Windungs-Kurzschluß befindet, oder
(b) nur in einer Teilmenge der Spulen veranlaßt, die die Spule bzw. die Spu len mit dem Windungs-Kurzschluß beinhaltet; oder
(c) in sämtlichen Spulen (8a-8c) veranlaßt.

6. Maschine nach einem der Ansprüche 1 bis 5, **dadurch gekennzeichnet, daß** zumindest ein Teil der keinen elektrischen Kurzschluß aufweisenden Spulen von der elektronischen Schalteinrichtung (4) betrieblich normal weiterbetrieben wird.

7. Maschine nach einem der Ansprüche 1 bis 6, **dadurch gekennzeichnet, daß** die Kurzschlußdetektoreinrichtung Temperatursensoren (18a-18c) innerhalb der Spulenwicklungen aufweist.

8. Maschine nach einem der Ansprüche 1 bis 7, **dadurch gekennzeichnet, daß** die Kurzschlußdetektoreinrichtung eine Induktivitätsmeßeinrichtung zum Messen der Spuleninduktivität aufweist.

9. Maschine nach Anspruch 8, **dadurch gekennzeichnet, daß** die Induktivitätsmeßeinrichtung innerhalb der elektronischen Schalteinrichtung (4) ausgebildet ist.

10. Maschine nach einem der Ansprüche 1 bis 9, **dadurch gekennzeichnet, daß** die Statorspulen als Einzelspulen (8a, 8b, 8c) ausgebildet sind, die elektrisch miteinander verkettet geschaltet sind und deren Ströme entsprechend verkettet von der elektronischen Schalteinrichtung (4) ein- bzw. ausgekoppelt werden.

11. Maschine nach einem der Ansprüche 1 bis 9, **dadurch gekennzeichnet, daß** die Statorspulen Einzelspulen sind (8a, 8b, 8c), deren Ströme durch unabhängig arbeitende Teile (6a, 6b, 6c) innerhalb der elektronischen Einrichtung ein- bzw. ausgekoppelt werden.

12. Verfahren zum Betreiben einer dauermagnetisch erregten elektrischen Maschine im Fall eines Kurzschlusses in einer Windung oder in einem Windungsteil einer Spule, wobei die Maschine aufweist:
- einen Rotor (R) mit einem oder mehreren Dauermagneten;
- einen Stator (S) mit einer oder mehreren Spulen (8a-8c) mit Spulenwicklungen; und
- eine elektronische Schalteinrichtung (4) zum Einkoppeln von Strom in die Spulen (8a-8c) und/oder zum Auskoppeln von Strom aus den Spulen, umfassend die Schritte:
- Überwachen jeder Spule (8a, 8b, 8c), um einen möglichen Windungs-Kurzschluß in der Spule zu erkennen, und
- im Fall eines Kurzschlusses, Veranlassen eines Kompensations-Stromflusses in zumindest derjenigen Spule, die die kurzgeschlossene Windung enthält, um den Kurzschlußstrom in der kurzgeschlossenen Windung zu reduzieren,
**dadurch gekennzeichnet, daß** als Kompensationsstrom ein aktiv gesteuerter Strom phasenrichtig in die betroffene Spule eingespeist wird.

13. Verfahren nach Anspruch 12, **dadurch gekennzeichnet, daß** das Überwachen einer Spule dadurch erfolgt, daß der Verlauf des Stroms in der Spule ausgewertet wird.

14. Verfahren nach Anspruch 12 oder 13, **dadurch gekennzeichnet, daß** zum Überwachen der Spule deren Temperatur erfaßt und ausgewertet wird.

15. Verfahren nach Anspruch 12 ,13 oder 14, **dadurch gekennzeichnet, daß** ein Kompensations-Stromfluß in einer Spule (8a-8c) dadurch veranlaßt wird, daß die elektronische Schalteinrichtung auf Stromdauerdurchgang eingestellt wird.

16. Verfahren nach einem der Ansprüche 12 bis 15, **dadurch gekennzeichnet, daß** in der von einem Kurzschluß betroffenen Spule und ggf. in einer oder mehreren weiteren Spulen ein Kompensations-Stromfluß veranlaßt wird, während die übrigen Spulen von der elektronischen Schalteinrichtung betrieblich normal weiterbetrieben werden.

## Claims

1. A permanent magnet excited electric machine, comprising:
- a rotor (R) having one or more permanent magnets;
- a stator (S) having one or more coils (8a to 8c) with coil windings; and
- an electronic switching means (4) for coupling current into the coils (8a to 8c) and/or for coupling out current from the coils,
- a short-circuit detection means (20; 16) for detecting a short-circuit in one or more turns of a coil (8a to 8c), and
- a compensation means for effecting a compensation current flow in at least that coil that contains the short-circuited turn, so as to reduce the short-circuit current in the short-circuited turn,
**characterized in**
**that** the electronic switching means (4) feeds actively controlled current into the coil or coils inflicted with a short-circuit, with said current being directed such that it flows in-phase with respect to the short-circuit current within the turn or turn section inflicted with the short circuit.

2. A machine according to claim 1,
**characterized in that** the compensation means comprises a switching means (14a to 14c) between the terminals (10a, 12a; 10b, 12b...) of the coils (8a, 8b, ...) for short-circuiting the same.

3. A machine according to claim 1 or 2,
**characterized in that** the compensation means is component part of the electronic switching means (4).

4. A machine according to claim 3,
**characterized in that** the electronic switching means can be set to continuous current passage, so that a short-circuit results in the coils.

5. A machine according to any of claims 1 to 4,
**characterized in that** the compensation means effects a compensation current flow either
(a) only in the coil or coils in which the interturn short-circuit is present, or
(b) only in a partial quantity of the coils comprising the coil or coils with the interturn short-circuit; or
(c) in all of the coils (8a to 8c).

6. A machine according to any of claims 1 to 5,
**characterized in that** the electronic switching means (4) continues to operate at least part of the coils having no electric short-circuit in a normal mode of operation.

7. A machine according to any of claims 1 to 6,
**characterized in that** the short-circuit detection means comprises temperature sensors (18a to 18c) within the coil windings.

8. A machine according to any of claims 1 to 7,
**characterized in that** the short-circuit detection means comprises an inductance measuring means for measuring the coil inductance.

9. A machine according to claim 8,
**characterized in that** the inductance measuring means is formed within the electronic switching means (4).

10. A machine according to any of claims 1 to 9,
**characterized in that** the stator coils are in the form of individual coils (8a, 8b, 8c) that are electrically connected in interlinked manner and whose currents are coupled in and out, respectively, by the electronic switching means (4) in correspondingly interlinked manner.

11. A machine according to any of claims 1 to 9,
**characterized in that** the stator coils are individual coils (8a, 8b, 8c) the currents of which are coupled in and out, respectively, by independently operating parts (6a, 6b, 6c) within said electronic means.

12. A method of operating a permanent magnet excited electric machine in the event of a short-circuit in a turn or a turn part of a coil, said machine comprising:
- a rotor (R) having one or more permanent magnets;
- a stator (S) having one or more coils (8a to 8c) with coil windings; and
- an electronic switching means (4) for coupling current into the coils (8a to 8c) and/or for coupling out current from the coils,
said method comprising the following steps:
- monitoring each coil (8a, 8b, 8c) for detecting a possible interturn short-circuit in the coil, and
- in case of a short-circuit, effecting a compensation current flow in at least that coil that contains the short-circuited turn, so as to reduce the short-circuit current in the short-circuited turn,
**characterized in that** an actively controlled current is supplied in-phase in the affected coil as compensation current.

13. A method according to claim 12,

14. Verfahren nach Anspruch 12 oder 13, **dadurch gekennzeichnet, daß** zum Überwachen der Spule deren Temperatur erfaßt und ausgewertet wird.

15. Verfahren nach Anspruch 12, 13 oder 14, **dadurch gekennzeichnet, daß** ein Kompensations-Stromfluß in einer Spule (8a-8c) dadurch veranlaßt wird, daß die elektronische Schalteinrichtung auf Stromdauerdurchgang eingestellt wird.

16. Verfahren nach einem der Anspruche 12 bis 15, **dadurch gekennzeichnet, daß** in der von einem Kurzschluß betroffenen Spule und ggf. in einer oder mehreren weiteren Spulen ein Kompensations-Stromfluß veranlaßt wird, während die übrigen Spulen von der elektronischen Schalteinrichtung betrieblich normal weiterbetrieben werden.

## Revendications

1. Machine électrique à excitation par aimant permanent, comprenant
- un rotor (R) avec un ou plusieurs aimants permanents ;
- un stator (S) avec une ou plusieurs bobines (8a-8c) avec des enroulements de bobine ;
- un dispositif de commutation électronique (4) pour envoyer du courant dans les bobines (8a-8c) et/ou pour tirer du courant des bobines,
- un dispositif de détection de court-circuit (20 ; 16) pour détecter un court-circuit dans une ou dans plusieurs spires d'une bobine (8a-8c), et
- un dispositif de compensation pour provoquer la circulation d'un courant de compensation dans au moins la bobine qui contient la spire court-circuitée, afin de réduire le courant de court-circuit dans la spire court-circuitée,
**caractérisée en ce que** le dispositif de commutation électronique (4) alimente la ou les bobines affectées par le court-circuit en courant commandé de manière active, lequel est dirigé de manière à s'écouler en phase avec le courant de court-circuit, à l'intérieur de la spire ou du tronçon de spire affecté par le court-circuit.

2. Machine selon la revendication 1, **caractérisée en ce que** le dispositif de compensation comporte un dispositif de commutation (14a-14c) entre les bornes (10a-12a ; 10b-12b...) des bobines (8a, 8b,...), afin de court-circuiter celles-ci.

3. Machine selon la revendication 1 ou 2, **caractérisée en ce que** le dispositif de compensation fait partie intégrante du dispositif de commutation électronique (4).

4. Machine selon la revendication 3, **caractérisée en ce que** le dispositif de commutation électronique peut être réglé sur le passage permanent d'un courant, de sorte qu'il en résulte un court-circuit dans les bobines.

5. Machine selon l'une des revendications 1 à 4, **caractérisé en ce que** le dispositif de compensation provoque la circulation d'un courant de compensation soit
(a) uniquement dans la bobine ou les bobines dans lesquelles se trouve le court-circuit de spire, ou
(b) uniquement dans une partie des bobines qui contient la ou les bobines avec le court-circuit de spire ; ou
(c) dans toutes les bobines (8a-8c).

6. Machine selon l'une des revendications 1 à 5, **caractérisée en ce qu'**au moins une partie des bobines ne présentant pas de court-circuit électrique continue de fonctionner en mode normal sous l'effet du dispositif de commutation électronique (4).

7. Machine selon l'une des revendications 1 à 6, **caractérisée en ce que** le dispositif de détection de court-circuit comporte des sondes de température (18a-18c) à l'intérieur des enroulements des bobines.

8. Machine selon l'une des revendications 1 à 7, **caractérisée en ce que** le dispositif de détection de court-circuit comporte un dispositif de mesure d'inductance pour mesurer l'inductance des bobines.

9. Machine selon la revendication 8, **caractérisée en ce que** le dispositif de mesure d'inductance est réalisé à l'intérieur du dispositif de commutation électronique (4).

10. Machine selon l'une des revendications 1 à 9, **caractérisée en ce que** les bobines du stator sont réalisées comme bobines individuelles (8a, 8b, 8c) qui sont interconnectées électriquement entre elles et dont les courants sont couplés interconnectés de la même manière, ou désaccouplés, par le dispositif de commutation électronique (4).

11. Machine selon l'une des revendications 1 à 9, **caractérisée en ce que** les bobines du stator sont des bobines individuelles (8a, 8b, 8c)dont les courants sont couplés ou désaccouplés par des parties (6a, 6b, 6c) fonctionnant indépendamment, à l'intérieur du dispositif électronique.

12. Procédé pour faire fonctionner une machine électrique à excitation par aimant permanent dans le cas d'un court-circuit dans une spire ou dans une partie de spire d'une bobine, la machine comportant :
- un rotor (R) avec un ou plusieurs aimants permanents ;
- un stator (S) avec une ou plusieurs bobines (8a-8c) avec des enroulements de bobine ;
- un dispositif de commutation électronique (4) pour envoyer du courant dans les bobines (8a-8c) et/ou pour tirer du courant des bobines, comprenant les étapes suivantes :
- contrôle de chaque bobine (8a, 8b, 8c) pour détecter un éventuel court-circuit de spire dans la bobine, et
- en cas de court-circuit, la circulation d'un courant de compensation est provoquée au moins dans la bobine qui contient la spire court-circuitée, afin de réduire le courant de court-circuit dans la spire court-circuitée,
**caractérisé en ce qu'**un courant commandé de manière active, servant de courant de compensation, est introduit en phase dans la bobine concernée.

13. Procédé selon la revendication 12, **caractérisé en ce que** le contrôle d'une bobine s'effectue **en ce que** l'on exploite l'allure du courant dans la bobine.

14. Procédé selon la revendication 12 ou 13, **caractérisé en ce que** pour contrôler la bobine, sa température est détectée et exploitée.

15. Procédé selon la revendication 12, 13 ou 14, **caractérisé en ce que** la circulation d'un courant de compensation dans une bobine (8a-8c) est provoquée **en ce que** le dispositif de commutation électronique est réglé sur le passage permanent d'un courant.

16. Procédé selon l'une des revendications 12 à 15, **caractérisé en ce que** dans la bobine ou éventuellement dans un ou plusieurs bobines concernées par un court-circuit, la circulation d'un courant de compensation est provoquée, tandis que les autres bobines continuent de fonctionner en mode normal sous l'effet du dispositif de commutation électronique.
